# EUROPEAN PATENT APPLICATION

(11) **EP 2 648 376 A1**
(43) Date of publication of application: **09.10.2013**
(21) Application number: 12765094.3
(22) Date of filing: 22.03.2012
(51) Int. Cl.: H04L 12/56, H04L 29/12

(54) **ADDRESS RESOLUTION PROTOCOL (ARP) TABLE ENTRY CONFIGURATION METHOD AND DEVICE**

(30) Priority: 31.03.2011 CN 201110081741
(71) Applicant: Huawei Technologies Co., Ltd., Shenzhen, Guangdong 518129 (CN)
(72) Inventor: LI, Yuanjia, Guangdong 518129 (CN); YANG, Dongdong, Guangdong 518129 (CN); WANG, Cuijun, Guangdong 518129 (CN)
(74) Representative: Lord, Michael
(86) International application number: PCT/CN2012/072806
(87) International publication number: WO 2012/130083

(57) **Abstract**

Embodiments of the present invention disclose a method and an apparatus for configuring an ARP entry. The method includes: acquiring, by a first router, when determining that a second router is a reachable neighbor, information needed for configuring an ARP entry; and configuring, by the first router during neighbor route calculation performed with the second router, the ARP entry according to the acquired information needed for configuring the ARP entry. When neighbor establishment between the first router and the second router is completed, because the ARP entry configuration on neighbor routers has been completed and IP traffic can be forwarded normally, the problem that partial traffic is lost when the neighbor routers perform traffic forwarding for the first time is avoided.

## Description

This application claims priority to Chinese Patent Application No. 201110081741.3, filed with the Chinese Patent Office on March 31, 2011 and entitled "METHOD AND APPARATUS FOR CONFIGURING ADDRESS RESOLUTION PROTOCOL ARP ENTRY", which is incorporated herein by reference in its entirety.

### FIELD OF THE INVENTION

The present invention belongs to the field of communications technologies and specifically relates to a method and an apparatus for configuring an ARP (Address Resolution Protocol, Address Resolution Protocol) entry.

### BACKGROUND OF THE INVENTION

As stipulated in an Ethernet protocol, if a host wants to directly communicate with another host in the same local area network, it needs to know a MAC (Media Access Control, Media Access Control) address of a target host. In an IP (Internet Protocol, Internet Protocol) protocol stack, however, a network layer and a transport layer are only concerned about an IP address of the target host. Therefore, when an IP protocol is used in an Ethernet, the Ethernet protocol at a data link layer receives the data provided by an upper-layer IP protocol, which only contains the IP address of the target host. Then, the MAC address of the target host needs to be obtained according to the IP address of the target host. This is a function implemented by ARP.

In an IP network, a router serves as a basic network element and undertakes a role of transmitting an IP packet. After receiving a data packet, the router removes the header of a data link frame, searches a routing table for a next-hop address or a directly-connected interface according to a target IP address, and then encapsulates the data packet again and uses layer 2 addressing. At this moment, the router obtains the MAC address of the next-hop interface according to an ARP entry configured on itself, thereby mapping a layer 3 address (IP address) to a layer 2 address (MAC address), and puts a frame, which carries the layer 2 address of a next-hop interface device, on a transmission line at an egress to complete the forwarding of the data packet.

However, as a network device, the router only perceives an address configured on its own interface. To learn a reachable interface of a network address several hops away, the router needs to rely on a routing protocol. An ISIS (Intermediate System to Intermediate System, Intermediate System to Intermediate System) protocol is a protocol created for route learning. Assume that all routers within a network run the ISIS protocol. Then, a neighbor relationship is established between adjacent routers, and each router floods, in an autonomous system (Autonomous System, AS), the information about its adjacent neighbor and an IP address which can be directly reached. The router receives the information flooded by other routers in the AS, composes a network topology by combining its own link information, generates a shortest path map for reaching each router within the network according to an SPF (Shortest Path First, shortest path first) algorithm, and then figures out the routing information for reaching each IP address.

Because the ISIS protocol belongs to a layer 2 protocol, the router running the ISIS protocol cannot send an IP packet of a layer 3 protocol during a neighbor establishment process and cannot trigger ARP entry learning. Therefore, when neighbor route calculation is completed, because there is no corresponding ARP entry, partial traffic may be lost when a neighbor router performs traffic forwarding for the first time.

### SUMMARY OF THE INVENTION

Embodiments of the present invention provide a method and an apparatus for configuring an ARP entry to avoid the problem that partial traffic is lost when a neighbor router performs traffic forwarding for the first time.

The embodiments of the present invention adopt the following technical solutions:

A method for configuring an ARP entry includes:
acquiring, by a first router, when determining that a second router is a reachable neighbor, information needed for configuring an ARP entry; and
configuring, by the first router during neighbor route calculation performed with the second router, the ARP entry according to the acquired information needed for configuring the ARP entry.

A routing device includes:
an acquiring unit, adapted to: when determining that an adjacent router is a reachable neighbor, acquire information needed for configuring an ARP entry; and
a configuration unit, adapted to: during neighbor route calculation performed with the adjacent router, configure the ARP entry according to the acquired information needed for configuring the ARP entry.

In the preceding technical solutions of the embodiments of the present invention, when determining that the second router is a reachable neighbor, the first router acquires the information needed for configuring the ARP entry and configures the ARP entry according to the acquired information during neighbor route calculation performed with the second router. In this way, when neighbor establishment between the first router and the second router is completed, the ARP entry configuration on the first router and the second router has been completed, and IP traffic can be forwarded normally. Therefore, the problem that partial traffic is lost when the neighbor routers perform the traffic forwarding for the first time is avoided.

### BRIEF DESCRIPTION OF THE DRAWINGS

To describe the technical solutions in the embodiment of the present invention more clearly, the following briefly introduces the accompanying drawings needed for describing the embodiment of the present invention.
FIG. 1 is a schematic diagram of a method for configuring an ARP entry according to an embodiment of the present invention;
FIG. 2 is a schematic flowchart of neighbor establishment between two adjacent routers A and B on an Ethernet according to an embodiment of the present invention;
FIG. 3 is a schematic flowchart of a manner for configuring an ARP entry according to an embodiment of the present invention;
FIG. 4 is a schematic flowchart of another manner for configuring an ARP entry according to an embodiment of the present invention; and
FIG. 5 is a schematic diagram of an apparatus for configuring an ARP entry according to an embodiment of the present invention.

### DETAILED DESCRIPTION OF THE EMBODIMENT

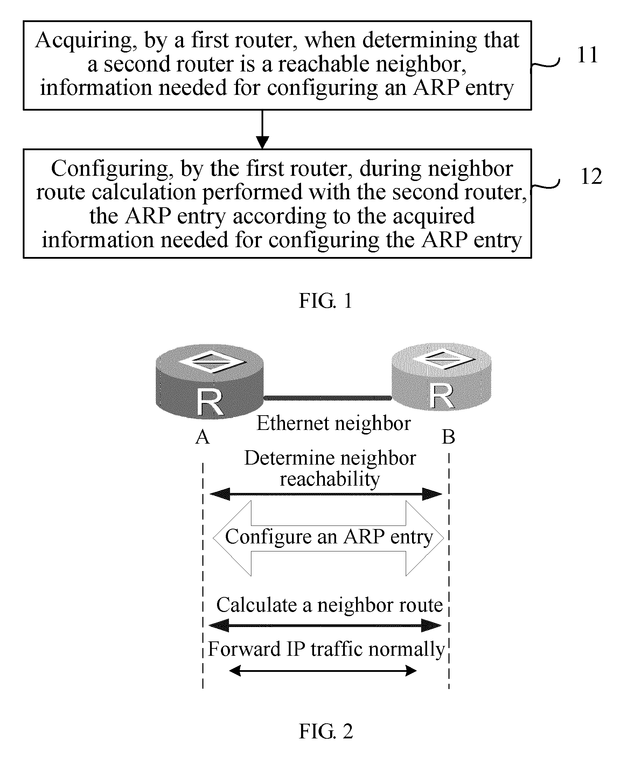

As shown in FIG. 1, a method for configuring an ARP entry according to an embodiment of the present invention includes:
11. acquiring, by a first router, when determining that a second router is a reachable neighbor, information needed for configuring an ARP entry; and
12. configuring, by the first router during neighbor route calculation performed with the second router, the ARP entry according to the acquired information needed for configuring the ARP entry.

FIG. 2 is a schematic flowchart of neighbor establishment between two adjacent routers A and B on an Ethernet according to an embodiment of the present invention. Routers A and B run an ISIS protocol. When determining that router B is a reachable neighbor (UP), router A acquires the information needed for configuring the ARP entry and configures the ARP entry according to the acquired information during neighbor route calculation performed by router A with router B. In this way, when neighbor establishment between router A and router B is completed, the ARP entry configuration on links of neighbor routers A and B has been completed, and IP traffic can be forwarded normally. Therefore, the problem that partial traffic is lost when the neighbor routers perform traffic forwarding for the first time is avoided.

When determining that the second router is a reachable neighbor, the first router may adopt one of the following two manners to configure the ARP entry: manner 1 is sending an ARP request packet of a layer 2 protocol; manner 2 is sending a HELLO packet of a layer 3 protocol. The following describes the two manners.

### Manner 1: Configure an ARP entry by sending an ARP request packet.

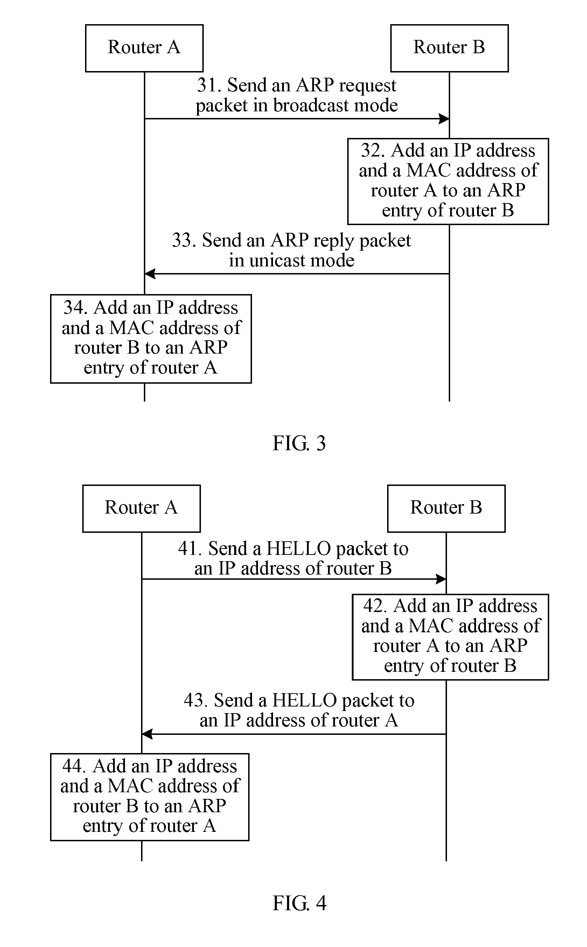

Still the two adjacent routers A and B on the Ethernet shown in FIG. 2 are taken as an example. Routers A and B run the ISIS protocol. When determining that router B is a reachable neighbor through the ISIS protocol, router A may acquire the IP address information of router B. By combining its own IP address and MAC address information of a neighbor router, router A is capable of configuring the ARP entry by sending an ARP request packet of a layer 2 protocol. For example, as seen in FIG. 3, FIG. 3 is a schematic flowchart of a manner for configuring an ARP entry according to an embodiment of the present invention. The manner includes:
31. Router A sends an ARP request packet in broadcast mode, where a destination IP address of the ARP request packet is an IP address of router B, a destination MAC address is a broadcast address, and the ARP request packet carries an IP address of router A and a MAC address of router A.
   For example, router A may encapsulate the IP address of router A and the MAC address of router A in content of the ARP request packet and encapsulates the IP address of router B in the packet header of the ARP request packet.
32. After receiving the ARP request packet, router B determines whether its own IP address is the destination IP address of the ARP request packet, and when determining that its own IP address is the destination IP address of the ARP request packet, acquires, from the ARP request packet, the IP address of router A and the MAC address of router A and adds the acquired information to an ARP entry of router B.
   For example, when determining that its own IP address is the destination IP address of the ARP request packet according to the IP address encapsulated in the packet header of the ARP request packet, router B acquires, from the content of the ARP request packet, the IP address of router A and the MAC address of router A and adds them to its own ARP entry.
33. When determining that its own IP address is the destination IP address of the ARP request packet, router B sends an ARP reply packet to router A in unicast mode, where a destination IP address of the ARP reply packet is the IP address of router A, a destination MAC address is the MAC address of router A, and the ARP reply packet carries the IP address of router B and an MAC address of router B.
   For example, router B encapsulates the IP address of router B and the MAC address of router B in content of the ARP reply packet and encapsulates the IP address of router A and the MAC address of router A in the packet header of the ARP reply packet.
34. After receiving the ARP reply packet, router A acquires, from the ARP reply packet, the IP address of router B and the MAC address of router B and adds the acquired information to an ARP entry of router A.

For example, router A acquires, from the content of the ARP reply packet, the IP address of router B and the MAC address of router B and adds them to its own ARP entry.

Then, router A and router B complete their own ARP entry configuration.

The period, of adjacent routers A and B of a broadcasting network, from neighbor reachability to neighbor route calculation completion, including completion of DIS (Designated Intermediate System, designated intermediate system) election, needs at least two timeout durations (20s by default) of a hello timer. Generally speaking, the duration is enough for completing a process in which adjacent routers A and B learn an ARP entry, that is, a process of completing the sending of an ARP request packet to acquire the information needed for configuring an ARP entry and configuring the ARP entry according to a received ARP reply packet. In this way, when neighbor establishment between routers A and B is completed, because the ARP entry configuration on the neighbor routers has been completed and IP traffic can be forwarded normally, the problem that partial traffic is lost during the traffic forwarding for the first time is avoided.

### Manner 2: Configure an ARP entry by sending a HELLO packet.

Still the two adjacent routers A and B on the Ethernet shown in FIG. 2 are taken as an example. Routers A and B run the ISIS protocol. When determining that router B is a reachable neighbor through the ISIS protocol, router A may acquire the IP address information of router B. Router B may also acquire the IP address information of router A. Because the IP address and MAC address of a local interface are known, an ARP entry may be configured by sending a HELLO packet of a layer 3 protocol. For example, as seen in FIG. 4, FIG. 4 is a schematic flowchart of another manner for configuring an ARP entry according to an embodiment of the present invention. The manner includes:
41. Router A sends a first HELLO packet to the IP address of router B, where the first HELLO packet carries the IP address of router A and the MAC address of router A.
42. After receiving the first HELLO packet sent by router A, router B acquires, from the first HELLO packet, the IP address of router A and the MAC address of router A and adds the acquired information to its own ARP entry.
43. Router B sends a second HELLO packet to the IP address of router A, where the second HELLO packet carries the IP address of router B and the MAC address of router B.
44. After receiving the second HELLO packet sent by router B, router A acquires, from the second HELLO packet, the IP address of router B and the MAC address of router B and adds the acquired information to its own ARP entry.

It should be noted that steps 41 and 42 and steps 43 and 44 may be concurrent and not in order. Then, router A and router B complete their own ARP entry configuration.

In the embodiment shown in FIG. 4, peer IP addresses and MAC addresses are acquired through Hello packet interaction between the adjacent routers A and B of the broadcasting network, which may replace the process of ARP entry learning, so as to complete ARP entry addition. In this way, when neighbor establishment between routers A and B is completed, because the ARP entry configuration on the neighbor routers has been completed and IP traffic can be forwarded normally, the problem that partial traffic is lost during the traffic forwarding for the first time is avoided.

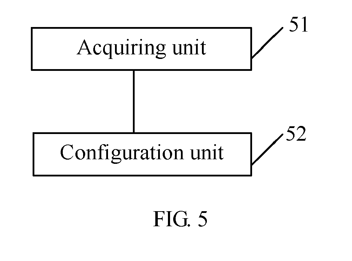

As shown in FIG. 5, a routing device according to an embodiment of the present invention includes:
an acquiring unit 51, adapted to: when determining that an adjacent router is a reachable neighbor, acquire information needed for configuring an ARP entry; and
a configuration unit 52, adapted to: during neighbor route calculation performed with the adjacent router, configure the ARP entry according to the acquired information needed for configuring the ARP entry.

In one implementation manner, the acquiring unit 51 may include:
a request module, adapted to send an ARP request packet in broadcast mode, where a destination IP address of the ARP request packet is an IP address of the adjacent router, a destination MAC address is a broadcast address, and the ARP request packet carries an IP address of the routing device and a MAC address of the routing device;
a receiving module, adapted to receive an ARP reply packet sent by the adjacent router in unicast mode, where a destination IP address of the ARP reply packet is the IP address of the routing device, a destination MAC address is the MAC address of the routing device, and the ARP reply packet carries the IP address of the adjacent router and a MAC address of the adjacent router; and
an acquiring module, adapted to acquire, from the ARP reply packet received by the receiving module, the IP address of the adjacent router and the MAC address of the adjacent router.

In this implementation manner, the configuration unit includes a configuration module. The configuration module is adapted to add the IP address of the adjacent router and the MAC address of the adjacent router that are acquired by the acquiring module to an ARP entry of the routing device.

In another implementation manner, the acquiring unit 51 may include:
a receiving module, adapted to receive a HELLO packet sent by the adjacent router to the IP address of the routing device, where the HELLO packet carries the IP address of the adjacent router and the MAC address of the adjacent router; and
an acquiring module, adapted to acquire, from the HELLO packet received by the receiving module, the IP address of the adjacent router and the MAC address of the adjacent router.

In this implementation manner, the configuration unit includes a configuration module. The configuration module is adapted to add the IP address of the adjacent router and the MAC address of the adjacent router that are acquired by the acquiring module to an ARP entry of the routing device.

From the router device in the preceding embodiment of the present invention, it may be known that: when determining that an adjacent router is a reachable neighbor, the routing device acquires, through the acquiring unit 51, information needed for configuring an ARP entry and uses the configuration unit 52 to configure the ARP entry according to the acquired information during neighbor route calculation performed with the adjacent router. In this way, when neighbor establishment performed with the adjacent router is completed, the ARP entry configuration on the neighbor routers has been completed, and IP traffic can be forwarded normally. Therefore, the problem that partial traffic is lost when the neighbor routers perform traffic forwarding for the first time is avoided.

Persons of ordinary skills in the art may understand that all or part of the steps of the methods in the embodiment may be implemented by a program instructing relevant hardware. The program may be stored in a computer readable storage medium, and the storage medium may be a read-only memory, a magnetic disk, or an optical disk, and the like.

The foregoing descriptions are merely specific embodiment of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the appended claims.

## Claims

1. A method for configuring an Address Resolution Protocol ARP entry, comprising:
acquiring, by a first router, when determining that a second router is a reachable neighbor, information needed for configuring an ARP entry; and
configuring, by the first router during neighbor route calculation performed with the second router, the ARP entry according to the acquired information needed for configuring the ARP entry.

2. The method according to claim 1, wherein the acquiring, by a first router, when determining that a second router is a reachable neighbor, information needed for configuring an ARP entry comprises:
sending, by the first router, an ARP request packet in broadcast mode, wherein a destination Internet Protocol IP address of the ARP request packet is an IP address of the second router, a destination Media Access Control MAC address is a broadcast address, and the ARP request packet carries an IP address of the first router and a MAC address of the first router;
receiving, by the first router, an ARP reply packet sent by the second router in unicast mode, wherein a destination IP address of the ARP reply packet is the IP address of the first router, a destination MAC address is the MAC address of the first router, and the ARP reply packet carries the IP address of the second router and a MAC address of the second router; and
acquiring, by the first router and from the ARP reply packet, the IP address of the second router and the MAC address of the second router.

3. The method according to claim 2, wherein the configuring, by the first router during neighbor route calculation performed with the second router, the ARP entry according to the acquired information needed for configuring the ARP entry comprises:
adding, by the first router, the IP address of the second router and the MAC address of the second router that are acquired from the ARP reply packet to an ARP entry of the first router; and
adding, by the second router after determining that its own IP address is the destination IP address of the ARP request packet, the IP address of the first router and the MAC address of the first router that are acquired from the ARP request packet to an ARP entry of the second router.

4. The method according to claim 1, wherein the acquiring, by a first router, when determining that a second router is a reachable neighbor, information needed for configuring an ARP entry comprises:
sending, by the first router, a first HELLO packet to an IP address of the second router, wherein the first HELLO packet carries an IP address of the first router and a MAC address of the first router;
receiving, by the first router, a second HELLO packet sent by the second router to an IP address of the first router, wherein the second HELLO packet carries an IP address of the second router and a MAC address of the second router; and
acquiring, by the first router and from the second HELLO packet, the IP address of the second router and the MAC address of the second router.

5. The method according to claim 4, wherein the configuring, by the first router during neighbor route calculation performed with the second router, the ARP entry according to the acquired information needed for configuring the ARP entry comprises:
adding, by the first router, the IP address of the second router and the MAC address of the second router that are acquired from the second HELLO packet to an ARP entry of the first router; and
adding, by the second router, the IP address of the first router and the MAC address of the first router that are acquired from the first HELLO packet to an ARP entry of the second router.

6. A routing device, comprising:
an acquiring unit, configured to: when determining that an adjacent router is a reachable neighbor, acquire information needed for configuring an ARP entry; and
a configuration unit, configured to: during neighbor route calculation performed with the adjacent router, configure the ARP entry according to the acquired information needed for configuring the ARP entry.

7. The routing device according to claim 6, wherein the acquiring unit comprises:
a request module, configured to send an ARP request packet in broadcast mode, wherein a destination IP address of the ARP request packet is an Internet Protocol IP address of the adjacent router, a destination Media Access Control MAC address is a broadcast address, and the ARP request packet carries an IP address of the routing device and a MAC address of the routing device;
a receiving module, configured to receive an ARP reply packet sent by the adjacent router in unicast mode, wherein a destination IP address of the ARP reply packet is the IP address of the routing device, a destination MAC address is the MAC address of the routing device, and the ARP reply packet carries the IP address of the adjacent router and a MAC address of the adjacent router; and
an acquiring module, configured to acquire, from the ARP reply packet received by the receiving module, the IP address of the adjacent router and the MAC address of the adjacent router.

8. The routing device according to claim 7, wherein the configuration unit comprises a configuration module, and the configuration module is configured to add the IP address of the adjacent router and the MAC address of the adjacent router that are acquired by the acquiring module to an ARP entry of the routing device.

9. The routing device according to claim 6, wherein the acquiring unit comprises:
a receiving module, configured to receive a HELLO packet sent by the adjacent router to an IP address of the routing device, wherein the HELLO packet carries an IP address of the adjacent router and a MAC address of the adjacent router; and
an acquiring module, configured to acquire, from the HELLO packet received by the receiving module, the IP address of the adjacent router and the MAC address of the adjacent router.

10. The routing device according to claim 9, wherein the configuration unit comprises a configuration module, and the configuration module is configured to add the IP address of the adjacent router and the MAC address of the adjacent router that are acquired by the acquiring module to an ARP entry of the routing device.
